# FASCICULE DE BREVET EUROPEEN

(11) **EP 0 469 938 B1**
(45) Date de publication et mention de la délivrance du brevet: **10.05.1995**
(21) Numéro de dépôt: 91401775.1
(22) Date de dépôt: 28.06.1991
(51) Int. Cl.: H01R 39/38

(54) **Dispositif porte-balais pour machine électrique à collecteur**
Bürstenhalter für elektrische Kollektormaschine
Brush holder for electric commutator machine

(30) Priorité: 30.07.1990 FR 9009702
(43) Date de publication de la demande: 05.02.1992
(73) Titulaire: AUTOMOBILES PEUGEOT, 75116 Paris (FR); AUTOMOBILES CITROEN, 92200 Neuilly-sur-Seine (FR)
(72) Inventeur: Bouton, Joel, F-95160 Eragny-sur-Oise (FR)
(74) Mandataire: Durand, Yves Armand Louis

(56) Documents cités:
- EP-A- 0 343 126
- EP-A- 0 418 135
- US-A- 4 801 833

## Description

La présente invention se rapporte à un dispositif porte-balais pour une machine électrique à collecteur, tel qu'un moteur par exemple.

On connait depuis longtemps des machines électriques à collecteur et du type comprenant un rotor, au regard de la périphérique duquel sont disposés des balais de commutation montés sur des supports ou porte-balais qui sont solidaires d'un stator et qui sont raccordés deux à deux par des conducteurs électriques. Dans ce type de machine, les porte-balais et les conducteurs électriques sont fixés sur un support en forme de couronne, par rivetage ou par vissage. La couronne est montée sur la machine, perpendiculairement à l'axe de rotation du rotor, et comporte une ouverture centrale au travers de laquelle une partie du rotor fait saillie.

Cependant, pour obtenir la meilleure commutation possible entre les pôles de la machine, il est nécessaire de positionner avec précision les porte-balais par rapport à la partie du rotor avec laquelle les balais de commutation collaborent. Pour ce faire, il est nécessaire de réaliser sur la couronne des surfaces de montage avec des usinages de qualité, et de consacrer un temps considérable à l'assemblage de l'ensemble.

On comprend donc que les dispositifs de montage des porte-balais de l'art antérieur sont complexes puisque comportant un nombre important de pièces telles que vis et écrous, et sont en outre coûteux puisque nécessitant des surfaces usinées avec précision et des temps d'assemblage importants.

Cependant, une machine électrique est connue du document EP-A-0 343 124 où la couronne et les porte-balais forment une pièce monobloc. L'invention a donc pour but de proposer un dispositif porte balais qui est encore plus homogène puisque comportant un nombre réduit de pièces, et qui est de plus économique, puisqu'il peut être monté rapidement et facilement, sans pour autant nécessiter des surfaces usinées avec précision.

A cet effet, l'invention a pour objet un dispositif porte-balais pour une machine électrique à collecteur et du type comprenant une couronne solidaire du stator, des porte-balais fixés dans une position de montage à la couronne et raccordés électriquement deux à deux par des conducteurs, la couronne étant disposée perpendiculairement à un axe de rotation X-X′ d'un rotor du moteur, dont une partie s'étend en saillie au travers d'une ouverture centrale de la couronne, chaque porte-balais comportant un logement placé au regard de la périphérie de la partie en saillie du rotor et dans lequel un balai de commutation est monté de façon à réaliser un contact de raccordement électrique entre le rotor et le stator. Les porte-balais et les conducteurs forment une pièce monobloc avec la couronne réalisée en matière isolante thermo-stable, les porte-balais et les conducteurs étant fixés dans leur position de montage par surmoulage de ladite matière isolante.

L'invention est encore caractérisée en ce que chaque porte-balais est constitué par un tronçon de profilé ayant une section transversale sensiblement en forme de T, avec une partie transversale noyée par surmoulage dans la matière isolante de la couronne, et une partie longitudinale comportant le logement précité.

Le dispositif est encore caractérisé en ce que la partie transversale de chaque porte-balais est constituée par deux parois latérales qui s'étendent perpendiculairement à la partie longitudinale et de part et d'autre de cette dernière.

On précisera encore ici que les conducteurs électriques ont la forme de lames à section sensiblement carrée et s'étendent en arc de cercle suivant un plan sensiblement parallèle à une surface de la couronne.

L'invention est encore caractérisée en ce que chaque lame conductrice est raccordée par une extrémité à une paroi latérale d'un porte-balais et par son autre extrémité à la paroi latérale d'un autre porte-balais de même polarité et qui est diamétralement opposé au premier, par rapport à l'axe du rotor.

Suivant encore une autre caractéristique de l'invention, le raccordement des extrémités des lames conductrices et des porte-balais est effectué par soudage, brasage ou sertissage.

Le dispositif est encore caractérisé en ce que le balai qui est monté dans le logement de chaque porte-culasse est constitué par deux éléments contacteurs.

On précisera encore ici que le logement comporte deux évidements débouchant au regard de chaque élément contacteur du balai de commutation qui est monté dans le logement, pour exercer une force de mise en contact de ces parties avec le rotor.

L'invention sera mieux comprise à la lecture de la description détaillée des modes de réalisation donnés uniquement à titre d'exemple, qui suit et se réfère aux dessins annexés dans lesquels.

La figure 1 est une vue en coupe longitudinale et suivant la ligne I-I de la figure 2, d'un moteur électrique équipé d'un dispositif conforme à l'invention.

La figure 2 est une vue de face du dispositif visible sur la figure 1, et avec une partie du moteur représentée en pointillés.

La figure 3 est une vue du dispositif en coupe suivant la ligne III-III de la figure 2.

La figure 4 est une section suivant la ligne IV-IV de la figure 2, au travers de la couronne et des conducteurs électriques du dispositif.

La figure 5 est une vue similaire à la figure 2 et qui représente un deuxième mode de réalisation du dispositif conforme à l'invention.

La figure 6 est une vue partielle et en section suivant la ligne VI-VI de la figure 5.

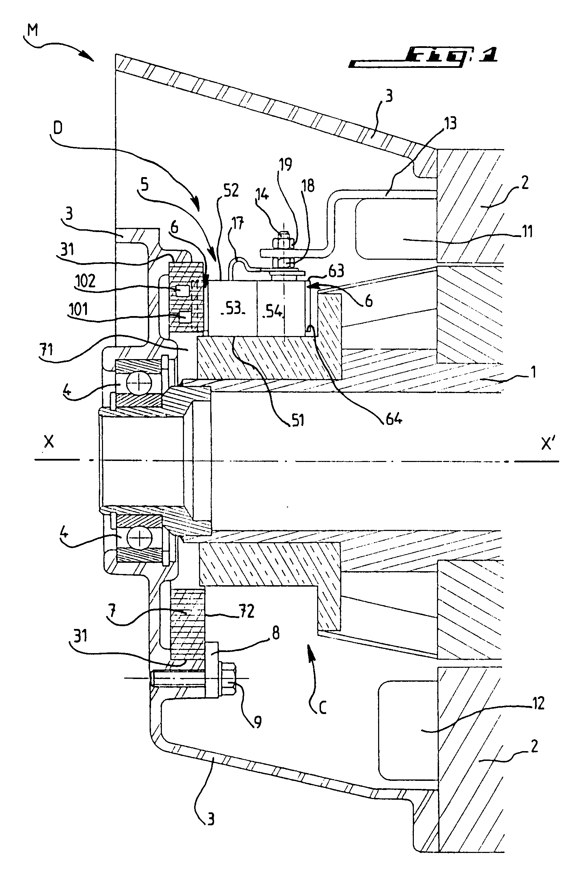

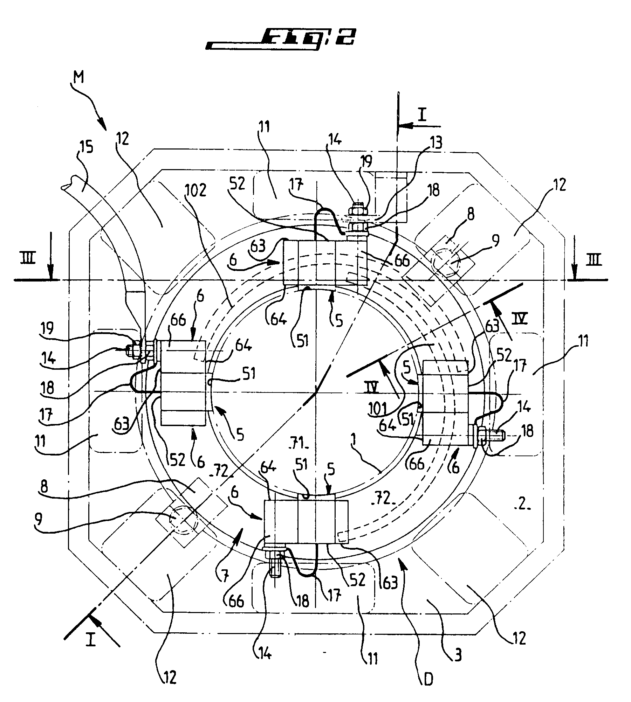

En se reportant aux figures 1 et 2, on voit qu'une machine électrique à collecteur tel qu'un moteur M est essentiellement constituée par un rotor 1, un stator 2 et un collecteur C protégé par un capot 3 qui est solidaire du stator 2.

Le rotor 1 est monté pivotant entre deux paliers dont l'un est prévu dans le capot 3 suivant un axe de rotation X-X′, à l'aide notamment d'un roulement à billes 4, visible sur la figure 1.

Le collecteur C comprend quatre balais de commutation 5 qui permettent l'établissement d'un contact électrique entre le stator 2 et le rotor 1. Chaque balai de commutation 5 est logé dans un support ou porte-balais 6, avec une surface de contact 51 de chaque balai 5 en appui contre la périphérie du rotor 1.

Les porte-balais 6 sont montés sur une couronne 7 qui est fixée au capot 3 perpendiculairement à l'axe X-X′ et de façon que le rotor 1 s'étende au travers d'une ouverture circulaire 71, formée à la partie centrale de la couronne 7. Le positionnement de l'ensemble couronne 7 - porte-balais 6 par rapport au stator 2 est assuré par un épaulement 31 du capot 3 dans lequel la couronne 7 vient se loger. Le maintien en position de la couronne 7 est effectué par deux plaquettes 8 prenant appui contre la couronne 7 et fixées au capot 3 à l'aide de vis de serrage 9 montées dans des perçages filetés du capot.

On voit bien sur la figure 2 que chaque porte-balai 6 comporte, sur une face 63 qui est opposée à la surface de contact 51 du balai 5 qui y est logé, un goujon 14 fixé par vissage ou par soudage. Un fil électrique 17 est fixé par une extrémité au goujon 14 à l'aide d'écrous 18 et son autre extrémité est noyée dans la face 52 du balai 5 opposé à la surface de contact 51.

Les balais de commutation 5 sont raccordés électriquement deux à deux à l'aide de conducteurs électriques 101 et 102, afin que chaque paire de balais 5 diamétralement opposés par rapport à l'axe X-X′ du rotor 1, forme un pôle de "signe" opposé à celui de l'autre paire de balais 5. Des bobinages principaux et auxiliaires du stator 2 repérés en 11 et 12 sont disposés à la périphérie du rotor 1.

L'une des paires de balais 5 est raccordée à une languette 13 de liaison électrique qui fait saillie du stator 2 à proximité d'un bobinage principal 11 et qui est reliée par son extrémité libre à un goujon 14 du porte-balais 6 correspondant. Cette languette 13 est fixée sur le goujon 14 à l'aide d'un écrou 19.

L'autre paire de balais 5 est quant à elle connectée à un câble 15 de raccordement électrique, qui est également relié à un goujon 14 de l'un des porte-balais 6 de cette paire à l'aide d'un écrou 19.

Un premier mode de réalisation d'un dispositif porte-balais conforme à l'invention et comportant notamment, comme décrit plus haut, une couronne 7, des porte-balais 6 et des conducteurs électriques 101 et 102 va être décrit maintenant en se reportant aux figures 1 à 4.

On voit particulièrement bien sur la figure 3 que la couronne 7 forme avec les porte-balais 6 et les conducteurs électriques 101 et 102 une pièce monobloc D, dans laquelle les conducteurs électriques 101 et 102 et une partie des porte-balais 6 sont noyés, dans leur position de montage. La pièce monobloc D est obtenue par surmoulage des éléments noyés avec une matière isolante électriquement et présentant une stabilité dimensionnelle élevée dans une gamme de températures correspondant aux températures de fonctionnement normal du moteur M. Cette matière qui sera appelée maintenant matière isolante thermo-stable. Conformément à l'invention, c'est la couronne 7 qui permet de maintenir assemblé la pièce D et en plus qui réalise l'isolation électrique des conducteurs et les porte-balais.

Sur la figure 3, on voit bien qu'en section transversale (c'est-à-dire en section suivant un plan perpendiculaire au rayon de la couronne 7 qui traverse l'un des balais 5 par son centre) chaque porte-balais 6 a sensiblement la forme d'un T avec une partie transversale 61 qui s'étend suivant le plan moyen de la couronne 7, et avec une partie longitudinale 62 qui s'étend parallèlement à l'axe de rotation X-X′ depuis une face 72 de la couronne 7 qui est opposée à la face de celle-ci qui repose contre l'épaulement 31. Chaque porte-balais 6 est constitué par un tronçon de barre profilée ayant une section transversale sensiblement en forme de T, comme visible sur la figure 3. Les porte-balais 6 sont réalisés dans un matériau présentant une stabilité dimensionnelle suffisante dans la gamme de températures de fonctionnement du moteur M, et qui est en outre électriquement conducteur.

Comme on le voit bien sur la figure 3, la partie transversale 61 de chaque porte-balais 6 est formée par deux parois latérales 611 et 612 qui s'étendent de part et d'autre de la partie longitudinale 62, et à angle droit avec cette dernière. Ces deux parois 611 et 612 rejoignent la face 63 et une face opposée 64 du porte-balais 6. Ces parois 611 et 612 sont noyées dans le matériau isolant qui constitue la couronne 7, de sorte qu'elles forment des bases de maintien pour les porte-balais 6 dans leur position de montage. La partie longitudinale 62 de chaque porte-balais 6 forme essentiellement un logement débouchant 621 présentant une section sensiblement rectangulaire et allongée suivant l'axe X-X′. Le logement 621 débouche d'une part sur la face 63 où est fixé le goujon 14, et d'autre part sur la face 64, au regard de la partie du rotor 1 qui fait saillie de l'ouverture centrale 71 de la couronne 7.

Un balai de commutatiton 5 est monté coulissant dans ce logement débouchant 621 de façon que la surface de contact 51 du balai 5, qui est placée au regard du rotor 1, vienne en appui contre la périphérie de ce dernier.

On remarque que sur les figures 1 et 3 que le balai 5 est constitué par deux éléments contacteurs identiques 53 et 54, de sorte que la surface de contact 51 est représentée sur la figure 3 par deux zones 513 et 514 délimitées en pointillés et correspondant respectivement aux éléments contacteurs 53 et 54 du balai 5.

A l'extrémité libre 65 du porte-balais 6, s'étend un doigt 66 intégral à l'une des parois longitudinales du logement 621 et sensiblement parallèle à la paroi 612 de la partie transversale 61.

Un perçage 67 est formé dans ce doigt 66 de façon à déboucher sensiblement perpendiculairement à la face 63 du porte-balais 6. Le goujon 14 décrit plus haut est fixé dans le perçage 67 par soudage ou par vissage.

On notera également ici que le logement débouchant 621 comporte sur son côté longitudinal opposé au doigt 66, deux évidements 68 et 69 qui débouchent respectivement au regard des zones 513 et 514 de montage des éléments contacteurs 53 et 54 du balai 5. De plus, chacun de ces évidements 68 et 69 débouche sur la face 63 du porte-balai 6, de façon que des ressorts de rappel (non représentés) puissent y être montés afin d'exercer sur les éléments contacteurs 53 et 54 du balai 5 une force permettant à la surface de contact 51 de venir en appui contre le rotor 1, afin de réaliser un contact de raccordement électrique entre le rotor 1 et le stator 2.

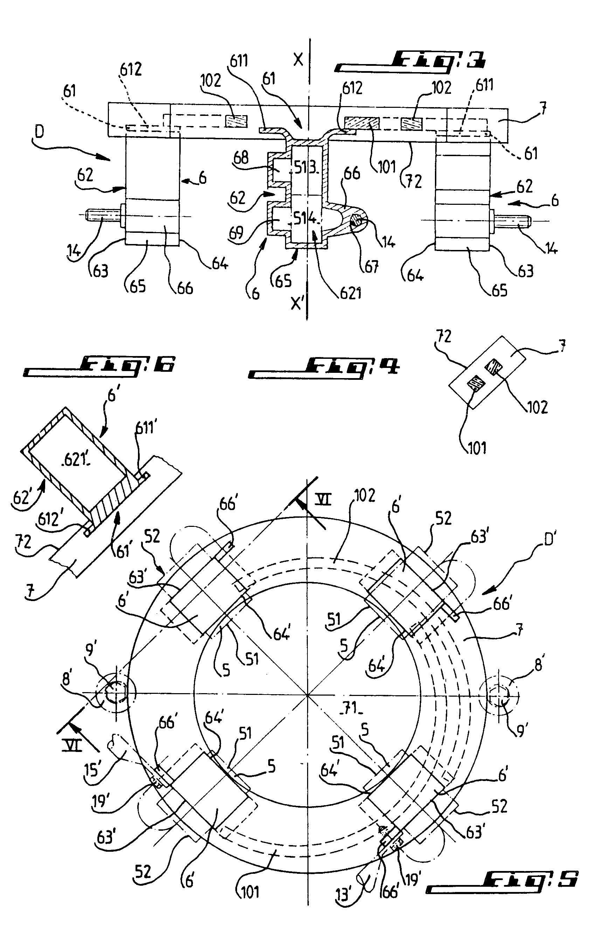

Comme on le voit bien sur la figure 4, les conducteurs 101 et 102 permettant la connexion électrique de chaque balai 5 de même polarité, sont constitués par des lames 101 et 102 de section transversale sensiblement carrée. Ces lames 101 et 102 réalisées en matériau conducteur et présentant une section transversale sensiblement carrée.

Il convient de noter ici que chacune des lames conductrices 101 et 102 est noyée dans la couronne 7 de façon à ne pas être en contact avec l'ensemble formé par la lame et le porte-balais 6 de polarité opposée.

En se reportant de nouveau aux figures 2 et 3, on voit que ces lames 101 et 102 décrivent chacune un arc de cercle s'étendant dans un plan sensiblement parallèle à la face 72 de la couronne 7. L'une des extrémités de chacune de ces lames 101 et 102 est reliée à une paroi latérale 612 de l'un des porte-balais 6 et l'autre extrémité est raccordée avec la paroi latérale 611 du porte-balais de même polarité qui est fixé à la couronne 7 à un emplacement diamétralement opposé. L'assemblage des lames conductrices 101 et 102 et des parois latérales 611, 612 est effectué par brasage, soudage ou sertissage, par exemple.

On comprend aisément qu'avec de tels conducteurs électriques noyés par surmoulage dans la couronne 7, tout gainage isolant est inutile et en plus, que les risques de rupture ou de désassemblage de ceux-ci avec les porte-balais 6 est avantageusement réduit.

En se reportant aux figures 5 et 6, un deuxième mode de réalisation de l'invention va maintenant être décrit.

Sur la figure 5, qui est une vue partielle et en section d'une pièce monobloc D′ suivant un plan similaire au plan de coupe de la figure 3, on a représenté un porte-balais 6′ ayant une forme simplifiée. Une partie transversale 61′ de ce porte-balais 6′, qui est constituée par deux parois latérales 611′ et 612′, est noyée par surmoulage dans un matériau électriquement isolant et stable thermiquement qui forme la couronne 7. Une partie longitudinale 62′ du porte-balais 6′ s'étend perpendiculairement depuis la partie transversale 61′ et présente une section rectangulaire. La partie longitudinale 62′ comporte un logement débouchant 621′ similaire à celui décrit pour le premier mode de réalisation de l'invention, mais ne comportant pas d'évidements.

Sur la figure 5, on voit que les plaquettes de fixation de la couronne 7 dans l'épaulement 31 du capot 3 sont avantageusement remplacées par des rondelles repérées par la référence 8′.

Comme on le voit bien sur la figure 6, le porte-balais 6′ ne comporte pas de doigt 66 pour la connexion avec la languette 13 et le câble 15 de raccordement électrique du dispositif. Le doigt est remplacé dans ce mode de réalisation par une patte 66′ dans laquelle est formé un perçage fileté. Cette patte 66′ permet de fixer une languette 13′ et un câble de raccordement 15′, à l'aide de vis de fixation repérées en 19′.

Les pièces et éléments de la pièce monobloc D′ visible sur les figures 5 et 6 qui sont identiques ou similaires à ceux du dispositif D décrit plus haut sont désignés par les mêmes références numériques, et n'auront en conséquence pas besoin d'être décrits.

Le dispositif porte-balais conforme à l'invention est réalisé de la manière suivante.

Tout d'abord, deux ensembles lame conductrice - porte-balais sont formés par soudage, brasage ou sertissage des extrémités des lames 101 et 102 avec les porte-balais 6. Les deux ensembles ainsi constitués sont ensuite disposés dans un moule (non représenté) avec les porte-balais 6 et les lames 101, 102 immobilisés dans une position de montage précise. Cette position de montage visible sur les figures est telle que la partie longitudinale 62 de chaque porte-balais 6 est placée avec les faces 63 et 64 tangentes aux rayons de la couronne 7 que l'on souhaite obtenir par moulage, et s'étendant dans un plan parallèle à l'axe X-X′.

On comprend aisément que cette position de montage des porte-balais 6 permet aux surfaces de contact 51 de chaque balai 5 du moteur M de venir en contact sur la périphérie du rotor 1 pour assurer un raccordement électrique du dispositif de ce dernier avec le stator 2.

Une fois ces lames conductrices 101 et 102 ainsi que les porte-balais 6 sont placés et immobilisés avec précision dans leur position de montage, une matière isolante thermo-stable est coulée dans le moule afin de surmouler une couronne 7. Les goujons 14 et les ressorts (non représentés) sont alors montés sur les porte-balais 6. On précisera ici que les goujons 14 peuvent également être fixés sur les porte-balais 6 avant l'opération de surmoulage.

Le dispositif porte-balais décrit plus haut et obtenu comme expliqué précédemment a pour principal avantage d'être constitué par une pièce monobloc comprenant les conducteurs et les porte-balais.

Avec une telle pièce monobloc, un positionnement précis des porte-balais 6 les uns par rapport aux autres et par rapport au rotor peut être facilement obtenu en plaçant la couronne 7 contre l'épaulement 31 du capot 3.

On précisera ici que les porte-balais du dispositif conforme à l'invention peuvent également être au nombre de deux, six, huit ou plus. En outre, le dispositif permet avantageusement d'améliorer la commutation entre les pôles du moteur en permettant un positionnement des balais de façon axée, non axée ou avec un décalage, selon la position de montage choisie lors du surmoulage des porte-balais.

On a donc obtenu un dispositif simple, rigide et homogène, et qui permet de réduire considérablement le coût de production du moteur M, en limitant les temps de montage et la quantité de pièces nécessaires à la réalisation du collecteur.

On notera encore ici que grâce aux connexions intérieures entre les porte-balais et les conducteurs, le refroidissement des balais de connexion est amélioré.

Bien entendu, l'invention n'est nullement limitée aux modes de réalisation décrits et illustrés qui n'ont été donnés qu'à titre d'exemple.

## Revendications

1. Dispositif porte-balais pour une machine électrique à collecteur et du type comprenant une couronne (7) en matière isolante solidaire du stator (2), des porte-balais (6,6′) associés à la couronne (7) dans une position de montage et raccordés électriquement deux à deux par des conducteurs (101,102) électriques, la couronne (7) étant disposée perpendiculairement à un axe de rotation (X-X′) d'un rotor (1) du moteur, dont une partie fait saillie au travers d'une ouverture centrale de la couronne (7), chaque porte-balais (6,6′) comportant un logement placé au regard de la périphérie de la partie en saillie du rotor et dans lequel un balai (5) de commutation est monté de façon à réaliser un contact de raccordement électrique entre le rotor (1) et le stator (2),
les porte-balais (6,6′) et les conducteurs (101,102) formant une pièce monobloc avec la couronne (7) réalisée en matière thermo-stable, les porte-balais (6,6′) et les conducteurs (101,102) étant fixés dans leur position de montage par surmoulage de ladite matière isolante.

2. Dispositif selon la revendication 1, caractérisé en ce que chaque porte-balais (6,6′) est constitué par un tronçon de profilé ayant une section transversale sensiblement en forme de T, avec une partie transversale (61,61′) noyée par surmoulage dans la matière isolante de la couronne (7), et une partie longitudinale (62,62′) comportant le logement (621,621′) précité.

3. Dispositif selon la revendication 1 ou 2, caractérisé en ce que la partie transversale (61,61′) de chaque porte-balais (6,6′) est constituée par deux parois latérales (611,611′; 612,612′) qui s'étendent perpendiculairement à la partie longitudinale (62,62′) et de part et d'autre de cette dernière.

4. Dispositif selon l'une revendication des revendications 1 à 3, caractérisé en ce que les conducteurs électriques (101,102) ont la forme de lames à section sensiblement carrée, et s'étendent en arc de cercle suivant un plan sensiblement parallèle à une surface (72) de la couronne (7).

5. Dispositif selon l'une des revendications 1 à 4, caractérisé en ce que chaque lame conductrice (101,102) est raccordée par une extrémité à une paroi latérale (611,611′) d'un porte-balais (6,6′) de même polarité et qui est diamétralement opposée au premier, par rapport à l'axe X-X′ du rotor.

6. Dispositif selon l'une des revendications 1 à 5, caractérisé en ce que le raccordement des extrémités des lames conductrices (101,102) et des porte-balais (6,6′) est effectué par soudage, brassage ou sertissage.

7. Dispositif selon l'une des revendications précédentes, caractérisé en ce que le balai (5) est monté dans le logement (621,621′) de chaque porte-balais (6,6′), et est constitué par deux éléments contacteurs (53,54).

8. Dispositif selon l'une des revendications précédentes, caractérisé en ce que le logement (621,621′) comporte deux évidements (68,69) débouchant au regard de chaque élément contacteur (53,54) du balai de commutation (5) qui est monté dans le logement, des ressorts pouvant être montés dans ces évidements de manière à exercer sur les éléments contacteurs (53,54) une force de mise en appui de la surface de contact (51) contre le rotor (1).

## Patentansprüche

1. Schleifbürstenhaltervorrichtung für eine elektrische Maschine mit Kollektor und derjenigen Gattung, mit einem mit dem Stator (2) fest verbundenen Ring (7) aus isolierendem Werkstoff, Schleifbürstenhalter (6, 6′), die dem Ring (7) in einer Einbaurichtung zugeordnet und zwei zu zwei durch elektrische Leiter (101, 102) angeschlossen sind, wobei der Ring (7) senkrecht zu einer Drehachse (X-X′) eines Rotors (1) des Motors angeordnet ist, dessen eine Teil durch eine mittlere Öffnung des Ringes (7) hindurchragt, wobei jeder Schleifbürstenhalter (6, 6′) eine gegenüber dem Umfang des vorspringenden Teiles des Rotors liegende Ausnehmung aufweist, in welcher eine Schaltungsschleifbürste (5) derart angeordnet ist, um einen elektrischen Anschlusskontakt zwischen dem Rotor (1) und dem Stator (2) herzustellen, wobei die Schleifbürstenhalter (6, 6′) und die Leiter (101, 102) mit dem Ring (7) ein einstückiges Glied aus hitzebeständigem Werkstoff bilden, wobei die Schleifbürstenhalter (6, 6′) und die Leiter (101, 102) in ihrer Einbaustellung durch Formvergiessen des besagten isolierenden Werkstoffes nach einem Gußstück befestigt sind.

2. Vorrichtung nach Anspruch 1, dadurch gekennzeichnet, dass jeder Schleifbürstenhalter (6, 6′) durch einen Profilabschnitt mit einem etwa T-förmigen Querschnitt gebildet ist, mit einem in den isolierenden Werkstoff des Ringes (7) durch Überformgiessen eingebeteten Querteil (61,61′) und einem die vorgenannte Aufnahme (621,621′) aufweisenden Längsteil (62, 62′).

3. Vorrichtung nach Anspruch 1 oder 2, dadurch gekennzeichnet, dass der Querteil (61, 61′) jedes Schleifbürstenhalters (6, 6′) durch zwei Seitenwände (611, 611′; 612, 612′), die sich senkrecht zu dem Längsteil (62, 62′) und beiderseits des letzteren erstrecken, gebildet wird.

4. Vorrichtung nach einem Anspruch der Ansprüche 1 bis 3, dadurch gekennzeichnet, dass die elektrischen Leiter (101, 102) die Gestalt von Blättern mit etwa quadratförmigen Querschnitt haben und sich im Kreisbogen in einer zu einer Fläche (72) des Ringes (7) etwa parallelen Ebene erstrecken.

5. Vorrichtung nach einem der Ansprüche 1 bis 4, dadurch gekennzeichnet, dass jedes leitende Blatt (101, 102) mit einem Ende an einer Seitenwand (611, 611′) eines Schleifbürstenhalters (6, 6′) derselben Polarität und der in Bezug auf die Achse X-X′ des Rotors dem ersten diametral entgegengesetzt ist, angeschlossen ist.

6. Vorrichtung nach einem der Ansprüche 1 bis 5, dadurch gekennzeichnet, dass die Verbindung der Enden der leitenden Blätter (101, 102) und derSchleifbürstenhalter (6, 6′) durch Schweissen, Löten oder Versicken durchgeführt wird.

7. Vorrichtung nach einem der vorangehenden Ansprüche, dadurch gekennzeichnet, dass die Schleifbürste (5) in der Ausnehmung (621, 621′) jedes Schleifbürstenhalters (6, 6′) eingesetzt ist und durch zwei Kontaktelemente (53, 54) gebildet wird.

8. Vorrichtung nach einem der vorangehenden Ansprüche, dadurch gekennzeichnet, dass die Ausnehmung (621, 621′) zwei gegenüber jedem Kontaktelement (53, 54) der in der Ausnehmung angeordneten Schaltungsschleifbürste (5) ausmündende Aussparungen (68, 69) aufweist, wobei Federn in diesen Aussparungen derart angeordnet sein können, um auf die Kontaktelemente (53, 54) eine Kraft zum Andrücken der Kontaktfläche (51) an den Rotor (1) auszuüben.

## Claims

1. Brush holder device for an electrical machine with a collector and of the type comprising a ring (7) of insulating material made fast to the stator (2), brush holders (6, 6′) associated with the ring (7) in a mounting position and electrically connected two by two by electrical conductors (101, 102), the ring (7) being disposed in perpendicular relation to an axis of rotation (X-X′) of a rotor (1) of the motor one part of which projects through a central opening of the ring (7), each brush holder (6, 6′) comprising a recess placed in front of the periphery of the projecting part of the rotor and in which a commutation brush (5) is mounted so as to provide an electrical connection contact between the rotor (1) and the stator (2), the brush holders (6, 6′) and the conductors (101, 102) forming a part integral in one piece with the ring (7) made from a thermo-stable material, the brush holders (6, 6′) and the conductors (101, 102) being fastened in their mounting position by the said insulating material being molded thereover.

2. Device according to claim 1, characterized in that each brush holder (6, 6′) is constituted by a sectional bar section having a substantially T-shaped cross-section with a transverse portion (61, 61′) embedded by being molded over into the insulating material of the ring (7) and a longitudinal portion (62, 62′) comprising the aforesaid recess (621, 621′).

3. Device according to claim 1 or 2, characterized in that the transverse portion (61, 61′) of each brush holder (6, 6′) is constituted by two side walls (611, 611′ ; 612, 612′) which extend in perpendicular relation to the longitudinal portion (62, 62′) on either side of the latter.

4. Device according to one of claim of claims 1 to 3, characterized in that the electrical conductors (101, 102) have the shape of blades with a substantially square section and extend according to an arc of a circle along a plane substantially parallel to one surface (72) of the ring (7).

5. Device according to one of claims 1 to 4, characterized in that each conducting blade (101, 102) is connected with one end to a side wall (611, 611′) of a brush holder (6, 6′) with like polarity and which is diametrally opposite to the first one with respect to the axis (X-X′) of the rotor.

6. Device according to one of claims 1 to 5, characterized in that the connection of the ends of the conducting blades (101, 102) and of the brush holders (6, 6′) is effected by welding, brazing or crimping.

7. Device according to one of the foregoing claims, characterized in that the brush (5) is mounted into the recess (621, 621′) of each brush holder (6, 6′) and is constituted by two contacting elements (53, 54).

8. Device according to one of the foregoing claims, characterized in that the recess (621, 621′) comprises two recessed portions (68, 69) opening in front of each contacting element (53, 54) of the commutation brush (5) which is mounted in the recess, whereas springs may be mounted into these recessed portions so as to exert upon the contacting elements (53, 54) a force for causing the contacting surface (51) to bear against the rotor (1).
